# EUROPEAN PATENT APPLICATION

(11) **EP 4 310 963 A1**
(43) Date of publication of application: **24.01.2024**
(21) Application number: 22186195.8
(22) Date of filing: 21.07.2022
(51) Int. Cl.: H01M 8/0273, H01M 8/0286, H01M 8/10

(54) **METHOD OF FIXING A MEMBRANE TO A FRAME, CELL STACK AND USE**

(71) Applicant: MANN+HUMMEL LIFE SCIENCES & ENVIRONMENT HOLDING SINGAPORE PTE. LTD., Singapore 139234 (SG)
(72) Inventor: FASOLD, Michael, 71549 Auenwald (DE); TSCHECH, Thomas, 71672 Marbach (DE)
(74) Representative: Mann + Hummel Intellectual Property

(57) **Abstract**

The present invention provides a method of fixing a membrane between a first frame member and a second frame member, the membrane having at least one property conferring incompatibility for fixing it to the first and second frame members. The method comprises: creating a fixation area comprising a first zone and a second zone, wherein creating the first zone comprises integrally bonding the first frame member to the second frame member, and wherein creating the second zone comprises mechanically deforming the membrane between the first frame member and the second frame member. There is also provided a cell stack and a use of an ion-exchange membrane in the disclosed cell stack.

## Description

### Technical Field

The present application relates to a method of fixing a membrane, particularly a separator membrane or an ion-exchange membrane, to a frame, a cell stack and a use of an ion-exchange membrane in the cell stack.

### Background Art

Membranes may be secured in a frame so that the center of the membrane is exposed to allow the membrane to perform its function, such as the exchange of molecules, ions, or other particles. The frame may be used to improve handleability of the membrane or to facilitate assembly of the membrane into a system. Where the membrane is used in a battery cell, fuel cell or similar, such as an electrodialysis cell or a PEM electrolyzer, the frame may provide the required isolation to prevent short-circuits.

Typical methods to secure the membrane to the frame include welding, adhesive bonding, mechanical forces, such as clamping, or any other method of connection. For certain applications, it is essential for the membrane to be durably secured to the frame to prevent mixing of substances between both sides of the membrane. For example, in battery cells, mixing of electrolyte between both sides of the membrane leads to discharge and/or short circuiting. In another example, mixing of filtered and unfiltered liquids between both sides of the membrane leads to contamination of the desired result, e.g., the filtered liquids.

Welding processes use heat and pressure to permanently join two objects together. However, the welding process becomes complex, sometimes unfeasible, if the welding properties of the two objects are so far apart, which prevents the application of heat and pressure to provide a suitable joint. In such scenarios, the materials of the two objects would need to be re-designed. Alternatively, adhesive bonding or mechanical forces, such as clamping, may be used to facilitate the securing of such objects together. However, as may be appreciated, the adhesives selected would need to withstand the immediate and/or operating environment of the secured objects for a reasonable period of time, while the mechanical forces selected need to be strong enough, yet not cause destruction of the secured objects.

There is therefore a need to provide a durable and sufficiently tight connection between a membrane and a frame that overcomes, or at least ameliorates, the problem(s) described above and other disadvantages.

### Summary

In an aspect, there is provided a method of fixing a membrane between a first frame member and a second frame member, the membrane having at least one property conferring incompatibility for fixing it to the first and second frame members. The method comprises creating a fixation area comprising a first zone and a second zone. Creating the first zone comprises integrally bonding the first frame member to the second frame member. Creating the second zone comprises mechanically deforming the membrane between the first frame member and the second frame member.

As the membrane is fundamentally incompatible to be fixed to the first and second frame members, the present disclosure advantageously provides a fixation area to allow fixation of the membrane between the first and second frame members. The membrane may be fundamentally incompatible to be integrally bonded to the first and/or second frame members. The membrane may have at least one property conferring incompatibility for integral bonding to the first and/or second frame members.

The present disclosure provides the second zone in the fixation area to advantageously allow fixation of the membrane to the frame members in a manner suitable for the fundamental incompatibility of the membrane and the frame member(s), i.e., mechanical fixation. At the same time, the first zone is provided to allow integral bonding between compatible parts, i.e., the first and second frame members, which advantageously provides an additional point of fixation. The "fixation area" refers to an area or section, in relation to the objects to be fixed together, meant for securing the membrane to the frame members. The fixation area may include area(s) where one of the objects to be fixed together is not present, such as the disclosed first zone where the membrane may not be present, as long as a purpose of the area is to enhance the securing or fixation of the membrane.

Creating the fixation area may comprise creating the first zone and creating the second zone. The first zone and the second zone may be created contemporaneously. The first zone and the second zone may be created by a welding process or during a welding process. Advantageously, the disclosed method provides a way to join objects using conventional and cost-effective welding processes. The disclosed method advantageously provides a way to weld objects with welding properties so far apart that they cannot be joined via known material-based joints. The welding process may be an ultrasonic welding process, a friction welding process, resistance welding process, or any other suitable types of welding processes.

Creating the first zone comprises integrally bonding the first frame member to the second frame member. The first zone may not comprise the membrane. The membrane may not be present in the first zone. Thus, the step of creating the first zone may comprise subjecting a two-layer structure comprising the first and second frame members to integral bonding.

The membrane may be provided between the first and second frame members only in the second zone. The method may further comprise providing the membrane between the first and second frame members only in the second zone.

Creating the second zone comprises mechanically deforming the membrane between the first frame member and the second frame member. The step of mechanical deformation may comprise mechanically deforming the membrane and one of the first or second frame members against the other frame member. Thus, the step of creating the second zone may comprise subjecting a three-layer structure comprising the membrane sandwiched between the first and second frame members to mechanical deformation. The three-layer structure may be mechanically deformed at one, two or a plurality of points in the second zone.

The second zone may be created in such a way that integral bonding does not occur or does not substantially occur. The step of creating the second zone may not comprise any integral bonding. Since the membrane is present in the second zone, the disclosed step of creating the second zone advantageously does not destroy the membrane, or a majority or substantial part of the membrane, due to the fundamental incompatibility of fixing or integral bonding. Destruction of the membrane, or a majority or substantial part of the membrane, during the fixation may cause undesirable leakages due to the broken connection between the membrane and frame members. As mentioned above, an unsecure sealing of the membrane to its frame causes a system in which the membrane and frame are in, such as a battery cell stack, to be compromised.

In some embodiments, creating the second zone may further comprise creating a transition zone in which integral bonding occurs. The step of creating the second zone or the step of creating the transition zone may comprise perforating the membrane, thereby allowing integral bonding to occur between the first frame member and the second frame member through the perforated membrane. The fixation area may comprise the transition zone. The transition zone may comprise an edge of the membrane. As the membrane may be provided only in the second zone, the edge of the membrane in such embodiment is positioned in the transition zone. The membrane may be perforated at plural points or at plural points along the edge of the membrane. Providing integral bonding in the presence of the membrane may advantageously result in yet another point of fixation. For example, good tear-out resistance of the membrane from the frame members may be obtained due to the transition zone. Where the membrane may react adversely in its immediate environment, for example where moisture in the environment causes the membrane to shrink, a combination of the mechanical deformation in the second zone and the integral bonding in the transition zone advantageously reduces leakages during operation of the eventual system. The environment or immediate environment may include, for example: the storage environment of the fixed membrane before assembly into the eventual system, such as an environment exposed to air which may have variations in relative humidity; the environment during manufacturing or assembly of the eventual system; or the operating environment of the assembled membrane in the eventual system. A membrane that shrinks in its environment may pull away from its fixation area with the frame members, thereby also causing undesirable leakages in the eventual operating environment. Thus, the combination of the mechanical deformation in the second zone and the integral bonding in the transition zone may advantageously reduce leakages in such scenario. Since integral bonding occurs through the perforated part(s) of the membrane in a local and/or spot-based manner, the non-perforated parts of the membrane in the transition zone may be held in place by the spots of integral bondings. Destruction of the membrane at its edges may not cause undesirable leakage since the mechanical deformation in the second zone assists in securing the membrane to the frame.

The fixation area may comprise a third zone. Creating the fixation area may further comprise creating the third zone. The method may further comprise creating the third zone by mechanically compressing the membrane with a projection of a frame member. The projection may be located on the first frame member, the second frame member, a different, third frame member, or a combination thereof. Alternatively, the method may further comprise creating the third zone by mechanically compressing the membrane with a sealing part. The third zone may advantageously provide yet another point of fixation. The mechanical deformation occurring in the second zone may be created by or during a welding process, which may eventually weaken the membrane or may even perforate membranes which have low elongation performances. Provision of a mechanical compression at an additional point of fixation advantageously allows the membrane, which is fundamentally incompatible to be fixed or integrally bonded to the frame members, to be more securely fastened to the frame.

Where the first and/or second frame members comprise a projection adapted to mechanically compress the membrane, the third zone may be created contemporaneously with the first and second zones. In such embodiment, the third zone may be created by simple application of a mechanical force, for example when the first, second and optional transition zones are created by or during a welding process, such as an ultrasonic welding process with pressure applied by a sonotrode which also provides the pressure to mechanically compress the membrane in the third zone. The third zone may not be created by or during a welding process but may be created by simple application of a mechanical force. Alternatively, where a different, third frame member comprises the projection adapted to mechanically compress the membrane, the third zone may be created separately, or not simultaneously, from the first and second zones. In such embodiment, the third zone may be created by simple application of a mechanical force, for example when the membrane fixed to the first and second frame members are provided in its eventual system, such as a battery cell stack. Assembling the eventual system may comprise fastening various components of the system together, including the membrane fixed to the first and second frame members, thereby providing a mechanical force to create the mechanical compression in the third zone. Simple application of pressure or a mechanical force means that specialized equipment providing excessive pressure or force is not required. Simple application of pressure or force may be done manually or by tools to assist in the application, such as fastening tools. Assembling the eventual system may comprise fastening various components of the system together, including the membrane fixed to the first and second frame members, thereby providing a mechanical force to create the mechanical compression in the third zone.

The fixation area may comprise a fourth zone. Creating the fixation area may further comprise creating the fourth zone. The fourth zone may be between the second zone and the third zone. The method may further comprise creating the fourth zone by mechanically compressing the membrane with a sealing part. The sealing part in the fourth zone may be different from the sealing part in the third zone. The fourth zone may advantageously provide yet another point of fixation.

In another aspect, there is provided a cell stack comprising at least one of: a separator membrane fixed between a first frame member and a second frame member, and a pair of electrode assemblies, the separator membrane fixed between the first frame member and the second frame member being provided between the pair of electrode assemblies. The separator membrane has at least one property conferring incompatibility for fixing it to the first and second frame members. The fixation area of the first frame member, the separator membrane and the second frame member comprises a first zone and a second zone. The first zone comprises the first frame member integrally bonded to the second frame member, and the second zone comprises a mechanically deformed separator membrane between the first frame member and the second frame member. The cell stack further comprises an electrically-isolated end plate in an adjacent layer to each outermost electrode assembly, wherein the layers of the cell stack are fastened together.

For ease of reference, a membrane, such as the separator membrane, fixed between a first frame member and a second frame member, and optionally a third frame member, is termed herein as a "membrane sandwich". The membrane sandwich provided between the pair of electrode assemblies is termed herein as a "cell". A cell configured for use in a battery or redox flow battery is therefore a "battery cell". A cell configured for use in hydrogen generation is an electrolyzer cell. A cell configured for use in water deionization is an electrodialysis cell.

The fixation area of the membrane sandwich comprises a first zone and a second zone. The first zone comprises the first frame member integrally bonded to the second frame member. The second zone comprises a mechanically deformed separator membrane between the first frame member and the second frame member. That is, the second zone comprises a mechanically deformed membrane sandwich.

As mentioned above, the first zone may not comprise the membrane. The first zone may be a two-layer structure comprising the first and second frame members integrally bonded to each other. The separator membrane may be provided between the first and second frame members only in the second zone. The fixation area of the membrane sandwich may therefore comprise: the first zone being a two-layer structure comprising the first and second frame members integrally bonded to each other; and the second zone being a mechanically deformed three-layer structure comprising the separator membrane sandwiched between the first and second frame members.

The disclosed cell stack comprises at least one cell. The number of cells in the cell stack depends on the output required. For a battery cell stack, the number of cells in the battery cell stack depends on the energy output needed. Where there is more than one cell, an electrode assembly of a pair of electrode assemblies may be shared with the adjacent cell.

The cell stack further comprises an electrically-isolated end plate in an adjacent layer to each outermost electrode assembly. Thus, the at least one cell is provided between a pair of electrically-isolated end plates.

The layers of the cell stack are fastened together. The at least one cell and the pair of electrically-isolated end plates are fastened together to result in the cell stack. Fastening of the layers of the cell stack may be performed with simple application of pressure or a mechanical force to provide adequate sealing or securing of the components of the cell stack.

In yet another aspect, there is provided the use of an ion-exchange membrane in the disclosed cell stack.

### Brief Description of Drawings

Fig. 1a shows an illustration of a section view along line AA' (shown in Fig. 1b) of a membrane 104 fixed between a first frame member 102 and a second frame member 106 according to an embodiment of the present disclosure.
Fig. 1b shows an illustration of a top view of the membrane 104 fixed between the first frame member 102 and the second frame member 106 according to the embodiment of Fig. 1a.
Figs. 2a to 2c show illustrations of a sonotrode 200 according to embodiments of the present disclosure.
Fig. 3a shows an illustration of the section view of membrane sandwich 100 along line AA', in which the zone 104a, where the membrane 104 is fixed between first frame member 102 and second frame member 106, further comprises transition zone 104c and the mechanical deformation second zone 104d.
Fig. 3b shows an illustration of a top view of a fixation area comprising zone 104a, transition zone 104c and mechanical deformation second zone 104d according to the embodiment of Fig. 3a, but only at two opposing sides of membrane 104.
Fig. 4a shows an illustration of a section view along line AA' (shown in Fig. 4b) of a membrane 104 fixed between a first frame member 102 and a second frame member 106 according to another embodiment of the present disclosure.
Fig. 4b shows an illustration of a top view of the membrane 104 fixed between the first frame member 102 and the second frame member 106, with third frame member 110 configured to mechanically compress membrane 104 against the first frame member 102, according to the embodiment of Fig. 4a.
Fig. 5 shows an illustration of the section view of membrane sandwich 100 according to the embodiment of Fig. 4a, in which the third frame member 110 comprises an edge chamfer at the edge of frame member 110.
Fig. 6a shows an illustration of the section view of membrane sandwich 100 according to the embodiment of Fig. 4a, in which the third frame member 110 is configured to mechanically compress membrane 104 against the first frame member 102, through second frame member 106.
Fig. 6b shows an illustration of a mechanically deformed membrane sandwich 100, upon application of a mechanical force, due to the projection of frame member 110 according to the embodiment in Fig. 6a.
Fig. 7a shows an illustration of a section view of a membrane 104 fixed between frame members according to another embodiment of the present disclosure, wherein fixation area 108 comprises first zone 102a, second zone 104a, third zone 104e and fourth zone 104f.
Fig. 7b shows an illustration of an alternative gasket that provides mechanical compression in the fourth zone 104f according to the embodiment of Fig. 7a.
Fig. 7c shows an illustration of another embodiment of the fourth zone 104f of Fig. 7a.
Fig. 8 shows an illustration of a section view of a battery cell stack 300 according to an embodiment of the present disclosure.

In the figures, like numerals denote like parts.

### Detailed Description

Hereinafter, exemplary embodiments of the present invention will be described in detail with reference to the accompanying drawings. The detailed description of this invention will be provided for the purpose of explaining the principles of the invention and its practical application, thereby enabling a person skilled in the art to understand the invention for various exemplary embodiments and with various modifications as are suited to the particular use contemplated. The detailed description is not intended to be exhaustive or to limit the invention to the precise embodiments disclosed. Modifications and equivalents will be apparent to practitioners skilled in this art and are encompassed within the spirit and scope of the appended claims.

There is provided a method of fixing a membrane between a first frame member and a second frame member.

A "frame" refers to a structure that holds or surrounds the membrane disclosed herein circumferentially. A frame member is a part of the frame that cooperates with other frame member(s) to hold or surround the membrane circumferentially. For example, a frame member may be a cross-sectional half of the frame, while another frame member is the other cross-sectional half of the frame, wherein the two cross-sectional halves sandwich the membrane. A frame may comprise different parts performing different functions to hold or surround the membrane circumferentially. The frame may comprise frame part(s) that form the structure of the frame, i.e., a structural frame part. The structural frame part may have a certain hardness conferring structure to the frame or the eventual system. The frame part may also be embodied as a film or foil that has relatively minimal thickness, so that stacked units of a plurality of membrane sandwiches may be assembled with minimal spacing relative to each other. The film or foil may have at least one property conferring compatibility for fixing or integral bonding to the other frame member. Having a frame member being a thinner, non-structural frame part allows for filling of any spaces between structural frame members. Filled spaces advantageously prevents or reduces leakage of electrolyte through the spaces into the environment. Filled spaces further advantageously prevents or reduces stress on the layers, such as the membrane, which may arise due to pressure from assembly and/or operation. The frame may comprise sealing part(s) that enhance the holding of the membrane to the structure of the frame. The sealing part may also allow for filling of any spaces between frame parts or frame members. The sealing part may be sealing material, such as glues, gaskets or other sealing material disclosed herein, possibly embodied as a film or foil of sealing material, or a filler material, such as foam, felt or other woven or non-woven materials. The frame may comprise a part of the system that the membrane sandwich is in, such as an electrode assembly if the system is a cell stack. Where the system is a cell stack, both frame members may not be electrode assemblies, since integrally bonding two electrode assemblies will create a short circuit. Thus, the first frame member and second frame member may each be selected from: a frame part forming the structure of the frame, a sealing part or a frame-compatible film, or an electrode assembly provided that both frame members are not electrode assemblies. In an embodiment, the first frame member is a frame part and the second frame member is a frame-compatible film.

The frame or frame member may be made of synthetic or natural polymeric material such as plastic or rubber, or other electrically non-conducting materials. Where the membrane sandwich is used in a battery cell, fuel cell or similar, the frame may provide the required isolation to prevent short-circuits. The frame or frame member may be made of thermoplastic polymer(s). Non-limiting examples of thermoplastic materials include nylon, polyethylene, polypropylene, polyester, polyamine, poly(ether ether ketone) (PEEK), or combinations thereof. In an embodiment, the frame member is made of polypropylene. In an embodiment, both the first and second frame members are made of polypropylene.

The membrane may be made of polymeric material or a blend of polymers or monomers; ceramic composite material; metals or metal alloys; or a combination thereof. The material of the membrane and the material of the frame member may be arbitrarily selected, so long as the membrane and the frame member are fundamentally incompatible to be fixed or to be integrally bonded to each other. As an example, the membrane comprises a polymeric material, in which poly(ether ether ketone) (PEEK) is present as part of or a substituent of the polymer backbone, while the frame members are made of polypropylene. As another example, the membrane comprises a polymeric material, in which polytetrafluoroethylene (PTFE) is present as part of or a substituent of the polymer backbone, while the frame members are made of polypropylene. The membrane may be or may be used as a separator membrane or an ion-exchange membrane. Where the membrane is an ion-exchange membrane, the membrane may comprise a polymer blend exhibiting acidic groups as well as basic groups. The membrane may comprise a polymer blend exhibiting acidic groups as well as basic groups, wherein PEEK is present as part of or a substituent of the polymer backbone of the polymer blend.

A core component of a battery cell, fuel cell or similar is the cell's membrane. The main tasks of the membrane are the separation of the positively and negatively charged electrolytes and the selective conduction of ions through the membrane, which is necessary for the conduction of electrons via the external circuit, therefore termed as "ion-exchange membrane". Another task of the membrane, such as of a fuel cell, is for humidification, since electric currents produced by an electrochemical reaction in the fuel cell utilizes moisture-enriched supplied air. Such membrane is a gas-to-gas membrane permeable to water vapor but not to other gaseous components in air. The term "membrane" also encompasses such gas-to-gas membranes. In addition to good electrochemical properties, such as high ionic conductivity and low electrical resistance, the membrane should have excellent mechanical and chemical stability, as well as low water absorption and swelling behaviour. Furthermore, the membrane should have good processing properties, such as handling and connectivity with other materials by welding or bonding. Finally, the battery or fuel cell with the membrane should show a high cycle stability, high energy efficiency, and high Coulomb efficiency of the whole system. As can be seen, the material of the membrane and its system has many requirements. It may be difficult to achieve all requirements, thus the present disclosure provides advantages where material incompatibility is inevitable.

The membrane may be of a single layer configuration or of a multi-layer configuration. In case of a multi-layer configuration, there are, for example, three membranes that are immediately resting on each other of which the central membrane is a functional membrane, or the membrane providing the main function of the exchange of molecules, ions, or other particles, and the outer ones each form a cover or support membrane.

The method comprises creating a fixation area comprising a first zone and a second zone, wherein creating the first zone comprises integrally bonding the first frame member to the second frame member, and wherein creating the second zone comprises mechanically deforming the membrane between the first frame member and the second frame member.

By "integral bonding", it is meant that two discrete objects are joined as a single, unitary structure at their point(s) of connection. Integral bonding includes material bonding in which the materials of the two discrete objects fuse or coalesce at their point(s) of connection, for example, with the application of heat and/or pressure. An example of integral bonding includes welding. Integral bonding is contrasted with adhesive bonding, as adhesive bonding may involve an integral bond between the adhesive and the material(s) in contact with the adhesive, but not an integral bond between the materials of the two discrete objects.

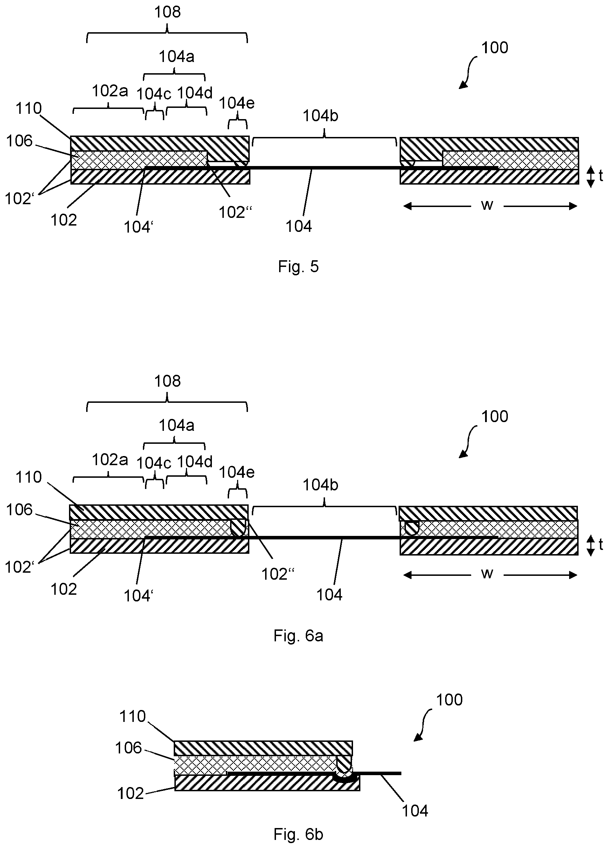

By "mechanical deformation", it is meant that the three-layer structure is warped or misshapened, and may retain its deformed shape. To be warped or misshapened, each layer preferably possesses a suitable elongation performance during the step of mechanical deformation to prevent breakage. Where a layer does not possess suitable elongation performance, the layer may be perforated, broken or punched during the step of mechanical deformation. The three-layer structure may be deformed to result in a three-dimensional shape, as opposed to its initial layered, linear form. An illustration of mechanically deformed layers in the third zone is shown in Fig. 6b, where the mechanical deformation is created by a projection of a third frame member 110. The mechanical deformation may be analogous to embossing of the membrane. Mechanical deformation of the membrane sandwich may result in the membrane and one of the first and/or second frame members having a similar deformed shape. Mechanical deformation of the membrane sandwich may result in the three layers having a similar shape. Mechanically deformed layers may have geometries complementary to each other. The mechanically deformed layers may be form fit. A mechanically deformed membrane may be configured to engage one or both frame members in at least a form-fitting and/or force-fitting manner for fixation. The mechanically deformed layers may have complementary form-fitting contours, for example contours formed as a vertically extending form-fitting groove or a form-fitting projection. The three-layer structure may be mechanically deformed in a form-fitting and/or force-fitting manner, for example by screwing, latching and/or clamping manner.

The membrane may have at least one property conferring incompatibility for fixing it to the first and second frame members. Where the method of fixing or joining comprises an integral bonding process, such as a welding process, the property conferring incompatibility includes the melting point. As the welding process involves the melting of objects to be joined, an object having a higher melting point than the other object to be joined may not melt or melt sufficiently in order for fusion or coalescence of the objects to occur. The difference in melting points may be 100°C or more, 130°C or more, 150°C or more, 180°C or more, or 200°C or more. Additionally or alternatively, the property conferring incompatibility includes being of a material different from the frame member(s). An example of a different material is where the membrane is a ceramic composite, while the frame member is a polymer. Another example is where the membrane is a polymer, the polymer backbone of the membrane may be different from the polymer constituting the frame member. A membrane made of a material which is different from that of a frame member may confer fundamental incompatibility for fixing or integrally bonding it to the frame member. Being made of different materials may also indicate that the melting points of the materials are different. For example, the melting point of a polyamide can be above 200°C, while the melting point of a polyolefin is usually below 200°C.

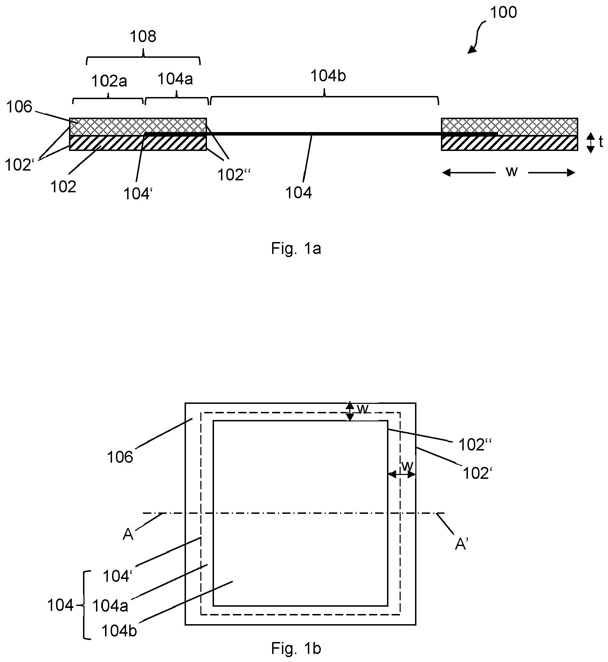

Fig. 1a shows an illustration of a section view along line AA' (shown in Fig. 1b) of a membrane 104 fixed between a first frame member 102 and a second frame member 106, that is membrane sandwich 100, according to an embodiment of the present disclosure. Fig. 1b shows an illustration of a top view of the membrane 104 fixed between the first frame member 102 (obscured in Fig. 1b) and the second frame member 106 according to the embodiment of Fig. 1a.

The membrane 104, first frame member 102 and second frame member 106 are as disclosed herein. Fixation area 108 comprises a first zone 102a and a second zone 104a. The first zone 102a comprises the first frame member 102 integrally bonded to the second frame member 106. The second zone 104a comprises a mechanically deformed membrane sandwich. The mechanical deformation in the second zone is not shown in the figures, although it can be seen from Fig. 1a that the first zone 102a is a two-layer structure comprising the first frame member 102 and the second frame member 106 and the second zone 104a is a three-layer structure comprising membrane 104 sandwiched between the first frame member 102 and the second frame member 106.

As can be seen in Figs. 1a and 1b, the frame members 102, 106, collectively termed the "frame", hold the membrane 104 around the circumference of the membrane 104. The frame allows the middle 104b of the membrane 104 to be exposed so that it can perform its function, such as the exchange of molecules, ions, or other particles. The functional surface area or active surface area (104b) of the membrane 104 is dependent on the requirements of the eventual system, such as the battery cell stack disclosed herein. Thus, the surface area of the membrane 104 sandwiched between frame members 102, 106 is also dependent thereon.

The surface area or width w of a side of the frame may be fully utilized as the fixation area 108, as shown in Fig. 1a. Where the method of fixing or joining comprises a welding process, the entire width w of a side of such frame or frame member may be subjected to the temperature and pressure of a welding tool, e.g., a sonotrode. Where the first zone 102a and the second zone 104a are created by a welding process or during a welding process, the entire width w of a side of such frame or frame member may be subjected to the temperature and pressure of a welding tool, e.g., a sonotrode. The first zone 102a may therefore be proximate to a first edge 102' of the frame members 102, 106. Alternatively, there may be a space or width between the first edge 102' before the first zone 102a commences. That is, the width w of a frame member may not correspond with the width of the fixation area 108. The width w of a frame member may be larger than the width of the fixation area 108. Referring to Fig. 1b, the width of the fixation area 108 of all sides of the frame may or may not correspond to each other. For example, the width of two opposing sides of the fixation area 108 may be the same as each other, but are different from the other two sides of the fixation area.

The width w of frame member 102 may or may not correspond to the width w of frame member 106. In Fig. 1a, the widths w of both frame member 102 and frame member 106 are shown to correspond to each other.

The thickness t of a frame member depends on the selection or the type of frame member. For example, where frame member 102 is a structural frame part and frame member 106 is a film, the thickness t of frame member 102 may be thicker than that of frame member 106. As an example, the thickness t of a suitable film ranges from about 10 microns to about 1000 microns, or from about 50 microns to about 1000 microns, or from about 100 microns to about 1000 microns, or from about 10 microns to about 500 microns, or from about 10 microns to about 300 microns, or from about 10 microns to about 200 microns, or from about 100 microns to about 200 microns. In an example, the thickness t of a suitable film is about 150 microns. Where frame member 106 is a polypropylene film, the thickness t of such frame member 106 may similarly range from about 10 microns to about 1000 microns, for example, 150 microns. The thickness t of structural frame member 102 may range from about 0.2 mm to about 10 mm, for example about 1 to 2 mm.

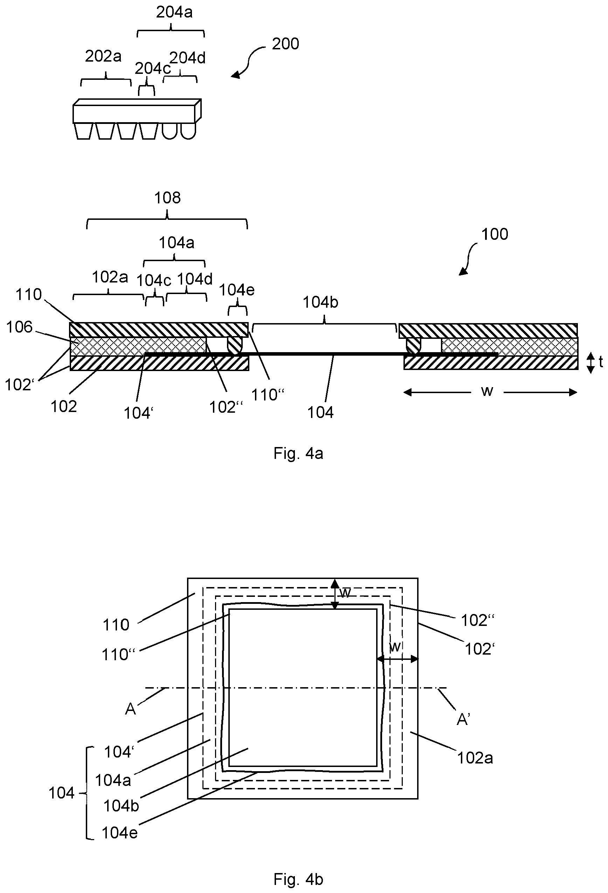

As seen in Fig. 1a, the membrane 104 is not present in the first zone 102a. The membrane 104 is provided between the first frame member 102 and the second frame member 106 in the second zone 104a. The second zone 104a is adjacent to the first zone 102a. Edge 104' of membrane 104 may mark the commencement of the second zone 104a. A second edge 102" of the frame members 102, 106 may mark the end of the second zone 104a. Where the second edges 102" of frame members 102, 106 do not correspond to each other, the end of the second zone 104a may be marked by edge 102" of the shorter frame member (such as is shown in Fig. 4), since the second zone 104a is a three-layer structure. As an example according to the embodiment in Fig. 1a, the total width w of a frame member is 12 mm, while the length of the membrane 104 provided between the first frame member 102 and the second frame member 106 is 7 mm. Therefore, the width of the first zone 102a is 5 mm and the width of the second zone 104a is 7 mm. It is to be noted that the figures are not drawn to scale.

The disclosed method may comprise creating the first zone 102a and creating the second zone 104a contemporaneously. The steps of creating the first zone 102a and the second zone 104a contemporaneously may comprise a welding process. The welding process may comprise contacting a welding tool on the first zone 102a and the second zone 104a. The contact surface of the welding tool may have dimensions corresponding to or complementary to the first zone 102a and the second zone 104a, in order to create the first zone 102a and the second zone 104a. The step of contacting the welding tool on the zones 102a, 104a may be performed under a set of conditions. The set of conditions may include a pressure setting or a sequence of a ramp-up and/or ramp-down of the pressure setting, duration of the pressure setting or pressure ramp, a force setting or a sequence of a ramp-up and/or ramp-down of the force setting, duration of the force setting or force ramp, a temperature setting or a sequence of a ramp-up and/or ramp-down of the temperature setting, duration of the temperature setting or temperature ramp setting, a setting of a welding depth or welding stroke, a sequence of a ramp-up and/or ramp-down of the welding depth or welding stroke, duration of the setting or ramping of the welding depth or welding stroke, other parameters required to define a reliable welding process, or a combination thereof. Where the welding process is an ultrasonic welding process, the set of conditions may further include an amplitude setting, a frequency setting, a vibration setting, sequence(s) of a ramp-up and/or ramp-down thereof, duration thereof, or a combination thereof.

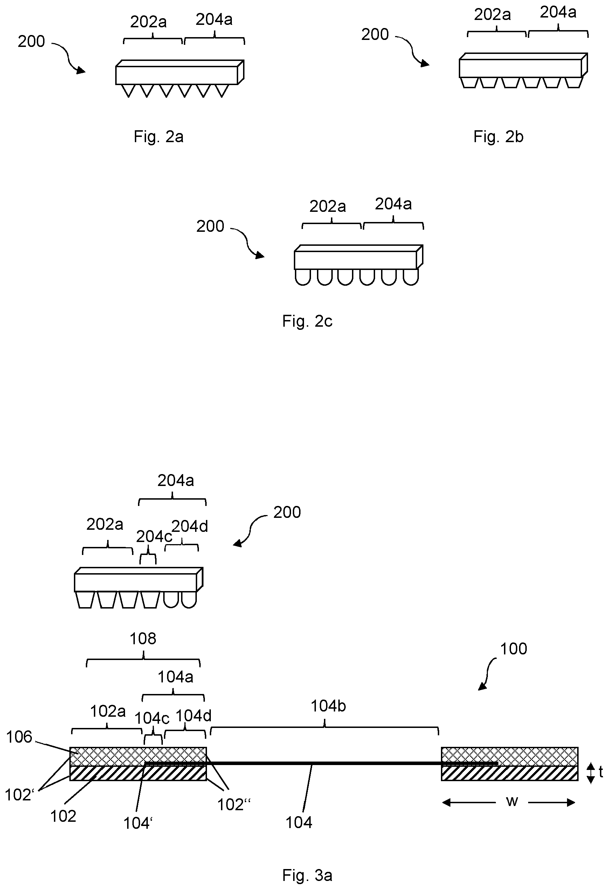

Where the welding process is an ultrasonic welding process, the welding tool may be a sonotrode. An illustration of a sonotrode 200 according to an embodiment of the present disclosure is shown in Fig. 2. The sonotrode 200 may comprise a first region 202a and a second region 204a. The first region 202a may be complementary to the first zone 102a, in order to create first zone 102a. The second region 204a is complementary to the second zone 104a, in order to create second zone 104a.

The second region 204a may have projections of a shape configured to mechanically deform the three-layer structure in the second zone 104a. The membrane sandwich may be mechanically deformed at a plurality of points according to the shape of the projections of the second region 204a. The shape of the projections of the second region 204a may be adapted according to the property(ies) of the membrane. In an embodiment, the shape of the projections of the second region 204a may be adapted according to the elongation performance of the membrane 104 used or according to the reaction of the membrane in its environment. The height of the projections may correspond to or be matched to the thickness of the three-layer structure in second zone 104a. As the membrane 104 may be relatively thin compared to the frame members 102, 106, the height of the projections in the first region 202a may also be similar or the same. The welding tool first contacts a frame member, such as the second frame member 106, which may not be as sensitive to the contact surface of the welding tool as the membrane 104 in terms of tearing, then contacts the membrane 104, and lastly contacts the other frame member, such as the first frame member 102, thereby providing a membrane sandwich mechanically deformed according to the shape of the projections of the second region 204a. The welding tool may mechanically deform the frame member it first contacts, through which it also mechanically deforms the membrane. It may be possible that the welding tool also mechanically deforms the last frame member, but this may or may not occur, depending on the hardness of that frame member and/or the welding conditions.

For membranes with relatively high elongation performance or membranes that do not react adversely in its environment, the contact surface of the welding tool, such as the sonotrode, may comprise distinct edges, as shown in Figs. 2a and 2b. Distinct or sharp edges may tear or perforate or otherwise weaken a membrane if it does not have sufficient elongation performance, thereby causing undesirable leakages in the operating environment. A relatively high elongation performance is, for example, an elongation percentage of 10%, 25%, 50%, 75%, 100%, 110%, 120% or more. For example, for polymeric membranes based on PTFE, membranes that do not show any significant reaction to variation in humidity in its environment and/or membranes that only tend to swell and not shrink in its environment, the contact surface of the welding tool, such as the sonotrode, may comprise pyramids (such as in Fig. 2a) or truncated pyramids (such as in Fig. 2b) over its contact surface.

For membranes with lower elongation performance or membranes that tend to cycle between physical states in its environment, such as shrinkage and swelling due to e.g. fluctuations in humidity in the storage environment or the operating environment, the contact surface of the welding tool, such as the sonotrode, may comprise rounded or smooth surfaces, as shown in Fig. 2c. The contact surface of the welding tool may not comprise distinct or sharp edges. Other types of rounded surfaces include a chamfer or other harmonized geometries. The welding conditions for such membranes may be less extreme than the welding conditions for membranes with relatively high elongation performance or for membranes that do not react adversely in its environment. A relatively low elongation performance is, for example, an elongation percentage of less than 10%, 8%, less than 8%, 5%, or less than 5%. Where the disclosed fixation area comprises the third zone and/or the fourth zone, the welding process may advantageously be conducted with less restrictions. For example, the contact surface of the welding tool, such as the sonotrode, may comprise distinct edges even if the membrane has a lower elongation performance or has the tendency to cycle between physical states in its environment. Advantageously, the third zone and/or fourth zone may prevent, or at least minimize, undesirable leakages even if the membrane is perforated during welding.

The first region 202a may be adapted to integrally bond the two-layer structure in the first zone 102a. The contact surface of the first region 202a may be adapted to provide adequate contact during the welding process. Adequate contact may be provided by means of projections. For ease and/or economy, the first region 202a may have projections similar to the second region 204a. As mentioned above, the frame members 102, 106 in the first zone 102a may not be as sensitive to the surface structure of the welding tool, meaning that the frame members 102, 106 may not be easily destroyed by the choice of surface structure of the welding tool. Therefore, the requirement of the shape of the projections of the first region 202a may not need to be as well-defined as that of the second region 204a. In an example, the shape of the projections of the first region 202a may be arbitrarily selected or adapted according to ease and/or economy of making the welding tool, or may follow the shape of the projections of the second region 204a. Hence, the first region 202a is shown in Figs. 2a to 2c to be the same as that in the second region 204a.

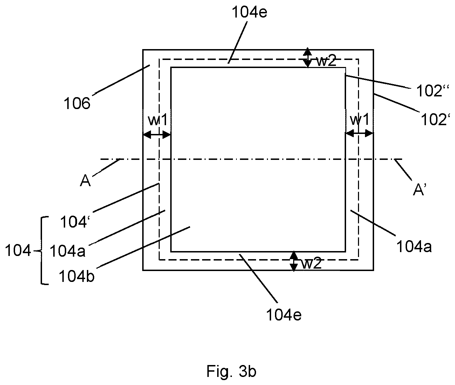

The disclosed method may comprise creating a transition zone in the second zone in which integral bonding occurs in the transition zone. Fig. 3a shows an illustration of the section view of membrane sandwich 100 along line AA' (shown in Fig. 3b), in which the zone 104a, where the membrane 104 is fixed between first frame member 102 and second frame member 106, further comprises transition zone 104c and the mechanical deformation second zone 104d. Transition zone 104c may be adjacent to the first zone 102a. As described above, edge 104' of membrane 104 may mark the commencement of the zone 104a, in particular the transition zone 104c. A second edge 102" of the frame members 102, 106 may mark the end of the zone 104a, in particular the end of mechanical deformation second zone 104d.

The welding process may therefore further comprise contacting a welding tool, such as sonotrode 200 also shown in Fig. 3a, on the first zone 102a, the transition zone 104c and the second zone 104d. The contact surface of the welding tool 200 may have dimensions corresponding to or complementary to the first zone 102a, the transition zone 104c and the second zone 104d. Similar to above, the welding tool 200 may comprise a first region 202a, a transition region 204c and a second region 204d which are complementary to the first zone 102a, the transition zone 104c and the second zone 104d, respectively.

In an embodiment, since the first region 202a of the welding tool may similarly be adapted to integrally bond the two-layer structure in the first zone 102a, the transition region 204c of the welding tool 200 may be similar or identical to the first region 202a. As the membrane 104 is fundamentally incompatible to be welded to the first and second frame members 102, 106, destruction of the membrane 104 is required in order to provide integral bonding in the transition zone 104c. The shape of the projections of the transition region 204c may therefore be adapted according to the property(ies) of the membrane 104. Unlike the second zone 104d where care must be taken to mechanically deform the membrane and not destroy the membrane, the contact surface of the transition region 204c and/or the first region 202a of the welding tool 200 may comprise distinct or sharp edges, such as the pyramids as shown in Fig. 2a or the truncated pyramids as shown in Fig. 2b. Here in Fig. 3a, the contact surface of the transition region 204c and the first region 202a of the welding tool 200 comprises pyramids. The distinct edges may advantageously perforate the membrane 104 in the transition zone 104c, thereby allowing the first and second frame members 102, 106 to be integrally bonded together through the perforated membrane 104. For membranes with lower elongation performance or membranes that tend to cycle between physical states in its environment, the considerations of the second region 104d remain as described above. Thus, the shape of the projections of the welding tool 200 in the transition region 204c and/or the first region 202a may be different to that of the second region 204d. As shown in Fig. 3a, the sonotrode 200 comprises a first region 202a complementary to the first zone 102a and a transition region 204c complementary to the transition zone 104c. The first region 202a and transition region 204c have projections of a shape configured to perforate the membrane 104 in the transition zone 104c, such as triangles. Since the first region 202a and the transition region 204c may have projections of the same shape, such region on the welding tool may simply be termed a "first region". The second region 204d is complementary to the second zone 104d. The second region 204d has projections of a shape configured to mechanically deform the membrane 104 in the second zone 104d, such as the rounded surface of the projections in 204d shown in Fig. 3a.

Thus, the first zone, the transition zone and the second zone of the fixation area may be created contemporaneously, such as by or during a welding process.

The first zone, the second zone and the optional transition zone may be created by or during a welding process at least at two sides of the membrane, e.g., at two opposing sides of the membrane. The fixation area comprising the first zone, the second zone and the optional transition zone may be created at two, three or all sides of the membrane. Referring to Fig. 3b, the fixation area 108 comprising the first zone 102a, the mechanical deformation second zone 104d and the transition zone 104c may be created at two opposing sides of the membrane 104. In such embodiments, the width w1 of the fixation area 108 of the two sides may be the same, and may be the same or different from the width w2 of the fixation area 108 of the other two sides. The fixation area of the other two sides may comprise mechanical fixation, e.g., not involving a welding process. That is, first zone 102a and the second zone 104a may not be present on some sides, but the fixation area of all sides may comprise mechanical fixation, e.g., the third zone 104e, which is described below. The embodiment of Fig. 3b may be useful when a frame member, either 102 or 106, is a film or foil. The film or foil may be provided as a roll of film or foil, or may even be provided as a roll comprising the membrane and the film or foil. The welding process may be performed after unrolling the roll onto a structural frame member. Advantageously, the processing speed of the disclosed method may be increased and the number of steps in the welding process may be reduced.

The disclosed method may comprise creating a third zone in which mechanical compression of the membrane by a projection of a frame member or a sealing part occurs. "Mechanical compression" refers to a form of mechanical fixation milder than mechanical deformation. Mechanical compression may involve provision of a mechanical force, such as by clamping, to cause immobility of the membrane between the frame members. Mechanical compression may not cause mechanical deformation, but in some embodiments, the mechanical forces used may be high enough to cause mechanical deformation. The mechanical compression in the third zone may be present at all sides of the membrane.

In embodiments, the disclosed method may comprise creating a third zone in which mechanical compression of the membrane by a sealing part (not shown in the figures), instead of a projection of a frame member, occurs. The sealing part may mechanically compress the membrane directly or indirectly against the opposite frame member, as described herein. The sealing part may be one as disclosed herein, such as a sealing material, e.g., a solid gasket. To accommodate the sealing part, the second edge 102" of one of the frame members 102, 106 may be shorter than the other. The sealing part may be arranged proximate the second edge in the third zone. The sealing part may be arranged in the third zone between the second edge 102" of the shorter frame member and center of the membrane 104b. Where a third frame member is present and is stacked adjacent to frame member 102 or 106, the third frame member may comprise a corresponding groove to accommodate the sealing part. A gasket may be retained in place by the groove. The gasket may be retained in place by glues or may be overmolded to a frame member. The sealing part may mechanically compress the membrane on one surface of the membrane or on both surfaces of the membrane. Each sealing part may be retained in place by a groove of an associated frame member or glues or may be overmolded to the associated frame member.

In embodiments, the disclosed method may comprise creating a third zone in which mechanical compression of the membrane by a projection of a frame member occurs. The frame member comprising the projection may be the first frame member 102 or the second frame member 106 or a third frame member 110 (shown in Figs. 4a and 4b). Where the projection is comprised on the first frame member 102 or the second frame member 106, the membrane may be mechanically compressed in the third zone between the first frame member and the second frame member. Where the projection is comprised on the third frame member 110, the membrane may be mechanically compressed in the third zone between the third frame member 110 and a frame member 102, 106 on the opposite side of the membrane 104 so as to sandwich the membrane 104.

Fig. 4a shows an illustration of a section view along line AA' (shown in Fig. 4b) of a membrane 104 fixed between a first frame member 102 and a second frame member 106, i.e., membrane sandwich 100, according to an embodiment of the present disclosure. Fig. 4b shows an illustration of a top view of the membrane 104 fixed between the first frame member 102 and the second frame member 106 (both obscured by a third frame member 110), with third frame member 110 configured to mechanically compress membrane 104 against the first frame member 102, according to the embodiment of Fig. 4a. The surface area or width w of a side of the frame is again fully utilized as the fixation area 108, however, with only a partial width of the frame utilized for a welding process and the remaining width utilized for mechanical compression in the third zone.

The fixation area 108 according to this embodiment comprises first zone 102a, transition zone 104c, mechanical deformation second zone 104d and third zone 104e. Here, in Figs. 4a and 4b, the third zone 104e is created by a projection of a different frame member (frame member 110). The different frame member may be a structural frame part. Providing a projection on a different frame member may be useful when the first frame member 102 or the second frame member 106 is a film, a sealing part, or otherwise thinner than a structural frame part. The third zone, such as 104e, may not be created by or during a welding process. The third zone may not be formed by a welding process. Thus, such projection is provided on a frame member, instead of a welding tool, in order to mechanically compress but not necessarily deform the membrane. This is shown in Fig. 4a, where sonotrode 200 has dimensions corresponding only to first zone 102a, transition zone 104c and mechanical deformation second zone 104d. The third zone 104e may be created separately, or not simultaneously, from the first zone 102a, transition zone 104c and second zone 104d. The third zone 104e may be created by fastening components of the system in which the membrane sandwich 100 is eventually assembled in, wherein a mechanical force is applied to fasten the components together.

Alternatively, the third zone 104e may be created by a projection of frame member 102 or frame member 106. In such embodiment, the projection 104e (not shown in the figures) may be comprised on the longer frame member 102, 106, such as frame member 102 in Fig. 4a, at a location outside the dimensions of the welding tool. Frame members 102 and 106 are brought together during the welding process and therefore projection 104e may be caused to mechanically compress membrane 104 contemporaneously with the creation of the zones during the welding process.

The projection of a frame member, such as frame member 110, may have a shape configured to mechanically compress the membrane 104 in the third zone 104e. The shape may not be particularly limited. The shape may be one disclosed herein, such as shapes with distinct edges, e.g., pyramids or truncated pyramids, or shapes with rounded or smooth surfaces, e.g., rounded cones, curved edges or chamfers having an appropriate radius. A particular example of a rounded projection is an edge chamfer at the edge of frame member 110, which is shown in Fig. 5. The edge chamfer of Fig. 5 has a radius or a curve corresponding to the thickness of frame member 106, so as to be able to mechanically compress membrane 104 appropriately. An edge of the frame member proximate the third zone may have a projection with a corresponding fillet. The shape may be adapted according to the properties of the membrane 104 used, such as the creep tendency, stiffness, or the elongation performance of the membrane or according to the reaction of the membrane in its environment, as described above. The frame member may have one or a plurality of projections. The projection(s) may extend along the margin of the frame member. The projection(s) may be provided at regular intervals along the margin of the frame member. The projection(s) may be provided at all sides of the membrane. Where the first zone, second zone and optional transition zone created by a welding process are created at two sides of the membrane, or not all sides of the membrane, the remaining sides of the membrane may be fixed to the frame members by the projection(s). The remaining sides of the membrane may be mechanically fixed, specifically mechanically compressed, by the projection(s) of the frame member. The third zone may be proximate a second edge of the frame members 102, 106, 110 opposite the first edge 102'. The second edge of the frame members is denoted in the figures as ("), for example the second edge of frame member 110 closer to the center of the membrane 104b is 110". Providing the third zone proximate the second edge may advantageously spread the points of fixation across the width of the frame. The mechanical compression in the third zone may advantageously relieve the membrane weakened during embossing by the welding process because, depending on the properties of the membrane, the embossing can negatively influence the tear resistance of the membrane, which may eventually tear off at the embossing points.

The projection on the frame member may mechanically compress the membrane directly, against an opposite frame member, such as shown in Fig. 4a. The projection on the frame member may mechanically compress the membrane without any intervening layers in between. Alternatively, the projection on the frame member may mechanically compress the membrane indirectly, against an opposite frame member, such as shown in Fig. 6a. The embodiment of Fig. 6a may be useful when the intervening layer, e.g., frame member 106 here, is a film, a sealing part, or otherwise mechanically compressible, or even deformable, without any use of heat and/or pressure. There may be more than one intervening layer, such as a film and a sealing part e.g. a gasket. The projection on the third frame member may optionally mechanically deform such intervening layer(s), through which it also mechanically deforms the membrane, against the opposite frame member.

The height of the projection(s) may be adapted so that mechanical compression of the membrane 104 can occur pass any other layers (Fig. 4a) or through any other layers (Fig. 6a), such as frame member 106. In general, the layers of frame members as well as the projection(s) may be designed in the direction of zero gap.

An illustration of a mechanically deformed membrane sandwich 100, upon application of a mechanical force, due to the projection of frame member 110 is shown in Fig. 6b. It can be seen that the projection of frame member 110 mechanically compresses, and in the specific embodiment of Fig. 6b, additionally deforms frame member 106 and membrane 104 according to the shape of the projection. Depending on the height of the projection, the projection may also create a mechanical deformation of frame member 102 according to its shape. It is shown in Fig. 6b that the projection of frame member 110 creates a dent in frame member 102, as opposed to a similar shape of the projection, as the height of the projection does not extend pass the thickness t of frame member 102. The frame member 106, membrane 104 and frame member 102 possess suitable yielding performances during the step of mechanical compression to be compressed, even deformed, yet not break. Although not shown in the figures, the mechanical deformation in the second zone can be visualized similar to the illustration of the mechanical deformation in the third zone in Fig. 6b.

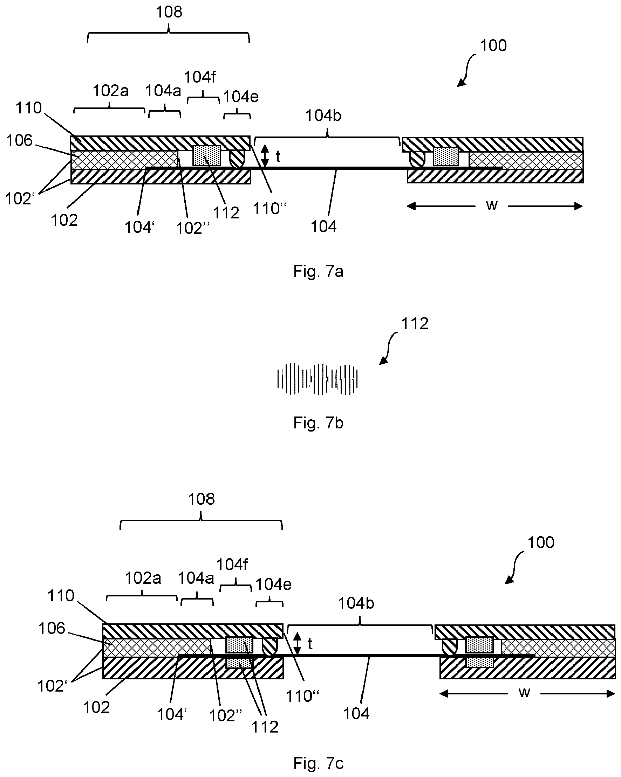

The fixation area 108 of the embodiments in Figs. 4 to 6 comprises first zone 102a, second zone 104a, which may comprise transition zone 104c and mechanical deformation second zone 104d, as well as third zone 104e. In some embodiments, the zones created by or during a welding process may be separated from the mechanical compression zone 104e. The separation may be by a fixation method as disclosed herein. The zones created by or during a welding process may be separated from the mechanical compression zone 104e by a fourth zone. Therefore, the fixation area may comprise a fourth zone. Advantageously, the fourth zone provides yet another point of fixation, thereby increasing the maximum pressure that the eventual system can withstand before undesirable leakages occur. Fig. 7a shows an illustration of fixation area 108 comprising first zone 102a, second zone 104a, which may comprise transition zone 104c and mechanical deformation second zone 104d, third zone 104e and fourth zone 104f. As the zones created by or during a welding process are separated from zone 104e by the fourth zone 104f, the second edge 102" of one of the frame members 102, 106 is shorter than the other in order to accommodate fourth zone 104f. The end of the second zone 104a is marked by edge 102" of the shorter frame member, i.e. frame member 106 in Fig. 7a. Thus, the shorter frame member of the zones created by or during a welding process, i.e. frame member 106, is adjacent to the fourth zone 104f.

The fixation method of the fourth zone 104f may comprise integral bonding, mechanical deformation or mechanical compression. In embodiments, the fourth zone 104f may comprise mechanical compression. The disclosed method may further comprise creating the fourth zone 104f by mechanically compressing the membrane 104 with a sealing part 112. The sealing part 112 mechanically compresses the membrane 104 against an opposite frame member, i.e. frame member 102 in Fig. 7a. The sealing part 112 may mechanically compress the membrane 104 directly against the opposite frame member or indirectly against the opposite frame member through an intervening layer, as described herein. The sealing part 112 may be one as disclosed herein, such as a sealing material. For example, the membrane 104 may be mechanically compressed in the fourth zone 104f by a solid gasket. The mechanical compression in the fourth zone 104f may be present at all sides of the membrane. For example, the solid gasket may be a hollow ring or quadrilateral that circumferentially surrounds the membrane at the fourth zone 104f. The solid gasket may be one conventionally used in the art, such as a rubber gasket. The solid gasket may or may not comprise profiles to increase or enhance the sealing or compression in the fourth zone 104f. For example, a gasket comprising a profile having bumps on the outer surface is illustrated in Fig. 7b.

In order for the fourth zone 104f to separate the welded zones and the mechanical compression zone, the sealing part 112 may be located between second zone 104a and the projection in the third zone 104e. The sealing part 112 in the fourth zone 104f may have a certain thickness t. Where the projection is comprised on the third frame member 110, as in Fig. 7a, the sealing part 112 may be located between the edge 102" of the shorter frame member 102 or 106 and the projection. Where the thickness t of the sealing part 112 is more than the adjacent frame member of the zones created by or during the welding process, i.e. frame member 106 in Fig. 7a, the sealing part 112 may be accommodated in a corresponding groove (not shown) on the third frame member 110. Where the projection is comprised on the first or second frame member 102, 106, the sealing part 112 may be accommodated in a groove in the first or second frame member 102, 106 between second zone 104a and the projection.

The sealing part 112 may mechanically compress the membrane 104 against an opposite frame member on one surface of the membrane 104, as shown in Fig. 7a. The sealing part 112 may mechanically compress the membrane 104 on each surface of the membrane 104. As shown in Fig. 7c, a sealing part 112 mechanically compresses a top surface of the membrane 104 and another sealing part 112 mechanically compresses a bottom surface of the membrane 104. Each sealing part 112 may be accommodated in a groove of an associated frame member where required, such as frame member 102 in Fig. 7c, in order to keep the layers of frame members at or as close to zero gap as possible.

The disclosed method is useful for the assembly of ion-exchange membranes in electrochemical process systems such as in an electrolyzer for hydrogen generation or in an electrodialysis cell for water deionization. The disclosed method is useful for the assembly of a battery cell stack. The system that the fixed membrane is eventually assembled into may be a cell stack, such as a battery cell stack, an electrolyzer cell stack or an electrodialysis cell stack. The following refers to a battery cell stack, although an electrolyzer cell stack or an electrodialysis cell stack may be similarly constructed.

A battery cell refers to the smallest unit of a battery for storing and/or converting energy, which comprises a positive electrode, a negative electrode, an electrolyte and a separator membrane. The separator membrane electrically separates the positive electrode and its electrolyte from the negative electrode and its electrolyte, meanwhile ensuring ionic transport between them. The battery cell may be a cell of a flow battery or a redox flow battery. In flow batteries, the separator membrane is a non-porous membrane, which lets pass only ions or electrons. Where the separator membrane lets pass only ions, the separator membrane is an ion-exchange membrane. A single cell may provide about 1 volt of energy. Depending on the requirements, a single cell or more than one cell may be stacked, along with other layers, to form an operational battery cell stack. Since an operational battery requires a stack of layers, the disclosed method of fixing the layers together is advantageous, especially in instances where the separator membrane is fundamentally incompatible for fixing or integrally bonding it to its frame.

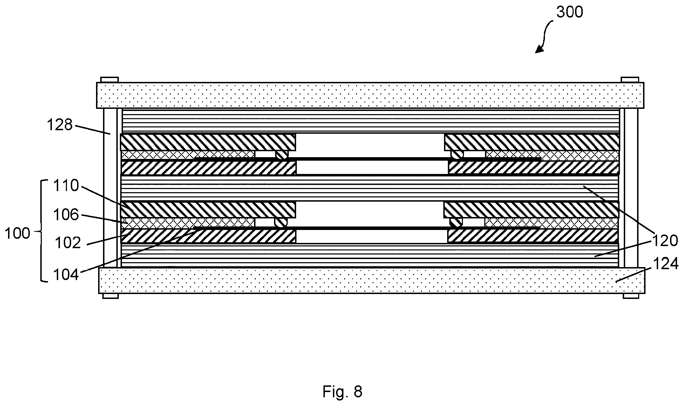

Fig. 8 shows an illustration of a section view of a battery cell stack 300 according to an embodiment of the present disclosure. For clarity, only one example of each layer is referenced by numerals in Fig. 8. The battery cell stack comprises at least one membrane sandwich provided between a pair of electrode assemblies. Fig. 8 shows two membrane sandwiches 100. Each membrane sandwich 100 is provided between a pair of electrode assemblies 120. One of the electrode assemblies 120 is shared by both membrane sandwiches 100. An electrode assembly adjacent two cells may be shared by both cells.

Each electrode assembly 120 may comprise a positive electrode or a negative electrode or a bipolar plate. For flow batteries, during discharge or operation, the positive electrode is a cathode and the negative electrode is an anode, while during charge, the positive electrode is an anode, and the negative electrode is a cathode. An electrode assembly 120 may further comprise a current collector. For example, an anode may include an anode current collector and an anode active material, while a cathode may include a cathode current collector and a cathode active material. The anode current collector may comprise a metal such as copper or the like. The cathode current collector may comprise a conductive metal, such as aluminum or the like. The anode active material, cathode active material and current collector may comprise any number of different conventional and/or proprietary materials. The current collector can be brought into close contact with the active material to increase battery output. The current collector may secure the active material in its place in the stack, thereby extending the life of the battery.

Here, frame member 106 is a polypropylene foil, which not only reduces thickness of the overall stack, but also allows sealed stacking of the layers, such as frame members 102 and 110. The frame of the battery cell stack therefore retains the electrolyte within the framed space, between the pair of electrode assemblies 120 and around the active area 104b of the membrane 104, without leaks or with minimal leaks, in a flow-tight manner. Any further spaces may be filled with sealing material, such as a thermosetting polymer like epoxy resins or other types of glues or solid gaskets, to prevent or reduce leakage. For example, the battery cell stack 300 may further comprise sealing material between an electrode assembly 120 and the membrane sandwich 100, e.g., between an electrode assembly 120 and frame member 102 and/or between an electrode assembly 120 and frame member 110. The battery cell stack 300 may also comprise any space, for example in the chamber above the membrane and/or the chamber below the membrane, occupied with sealing part(s) as disclosed herein, such as filler material, to prevent or minimize mechanical forces on the membrane.

The battery cell stack 300 further comprises an electrically-isolated end plate 124 in an adjacent layer to each outermost electrode assembly. The battery cell(s) are provided between a pair of electrically-isolated end plates 124. Adjacent to an electrode assembly layer, electrical isolation is required in order to prevent short-circuits. Short-circuits may occur when electrode assemblies contact each other. Electrical isolation may be provided by a frame member. Thus, one of the first or second frame members may be an electrode assembly. However, both the first and second frame members cannot be electrode assemblies. Electrically-isolated end plate 124 may be a frame member. Electrically-isolated end plate 124 may be a housing or part of a housing, i.e., a housing member, of the battery cell stack. Electrical isolation may be provided by end plate 124 or a separate isolation plate (not shown). End plate 124 may provide a means for fastening the layers of the battery cell stack together. End plate 124 may comprise through-holes for fasteners 128, such as bolts, screws, clamps, etc, to hold the layers of the battery cell stack together. Alternatively, the layers of the battery cell stack may be fastened together by sealing, for example by glue.

Where electrically-isolated end plate 124 is a housing or a housing member of the battery cell stack, the battery cell(s) may be inserted into the housing 124 or a housing comprising housing member 124. The housing or housing member 124 may provide the means for fastening the layers of the battery cell stack together.

Tests were done on a system or cell stack according to an embodiment of the present disclosure. The cell stack comprised a polymeric ion-exchange membrane having PEEK as part of or a substituent of the polymer backbone. The cell stack comprised frame members made of polypropylene. The membrane was fixed between a polypropylene film and a polypropylene structural frame part, the fixation area comprising the disclosed first zone, transition zone and second zone created by ultrasonic welding. The fixation area also comprised the disclosed third zone. At the third zone, the membrane was mechanically compressed between the polypropylene structural frame part and a solid gasket that was adjacent to the polypropylene film. Pressure testing of the cell stack was performed by introducing air into the chambers above and below the membranes of the cell stack. The air was introduced at various pressures between 100 mbar and 800 mbar. After introduction of the air, a period of time was given for the pressure readings to stabilize. After stabilization, the pressure in the chambers was measured to determine whether leaks were present. The pressure readings were maintained, thereby indicating that no leaks were observed in the pressure range tested.

## Claims

1. A method of fixing a membrane between a first frame member and a second frame member, the membrane having at least one property conferring incompatibility for fixing it to the first and second frame members, the method comprising:
creating a fixation area comprising a first zone and a second zone,
wherein creating the first zone comprises integrally bonding the first frame member to the second frame member, and
wherein creating the second zone comprises mechanically deforming the membrane between the first frame member and the second frame member.

2. The method of claim 1, wherein each frame member is selected from the group consisting of a frame part, a frame-compatible film, and an electrode assembly provided that both frame members are not electrode assemblies.

3. The method of claim 1 or 2, wherein the first zone is proximate to a first edge of the first and second frame members and the membrane is not present in the first zone.

4. The method of any preceding claim, wherein the second zone is adjacent to the first zone, and the method further comprises providing the membrane in the second zone between the first frame member and the second frame member.

5. The method of any preceding claim, wherein creating the second zone further comprises creating a transition zone in which integral bonding occurs, wherein the transition zone is adjacent to the first zone.

6. The method of any preceding claim, wherein the first zone, the second zone, and optionally the transition zone, are created by a sonotrode in an ultrasonic welding process,
wherein the sonotrode comprises a first region and a second region,
the first region being complementary to the first zone and the optional transition zone, and the first region having projections of a shape configured to perforate the membrane in the optional transition zone, thereby allowing integral bonding to occur between the first frame member and the second frame member through the perforated membrane, and
the second region being complementary to the second zone, and the second region having projections of a shape configured to mechanically deform the membrane in the second zone.

7. The method of any preceding claim, wherein the fixation area comprises a third zone, preferably proximate a second edge of the frame members opposite the first edge, and the method further comprises creating the third zone by mechanically compressing the membrane, preferably with a projection of a frame member or with a sealing part.

8. The method of claim 7, wherein where the membrane is mechanically compressed by a projection of a frame member, the membrane is mechanically compressed between the first frame member and the second frame member, or between a third frame member on an opposite side of the first or second frame member.

9. The method of claim 7 or 8, wherein the fixation area comprises a fourth zone and the method further comprises creating the fourth zone between the second zone and the third zone by mechanically compressing the membrane with a sealing part.

10. The method of any preceding claim, wherein the membrane is a separator membrane or an ion-exchange membrane.

11. A cell stack comprising:
at least one of:
a separator membrane fixed between a first frame member and a second frame member, the separator membrane having at least one property conferring incompatibility for fixing it to the first and second frame members,
wherein the fixation area of the first frame member, the separator membrane and the second frame member comprises a first zone and a second zone, the first zone comprising the first frame member integrally bonded to the second frame member, and the second zone comprising a mechanically deformed separator membrane between the first frame member and the second frame member; and
a pair of electrode assemblies, wherein the separator membrane fixed between the first frame member and the second frame member is provided between the pair of electrode assemblies;
and
an electrically-isolated end plate in an adjacent layer to each outermost electrode assembly,
wherein the layers of the cell stack are fastened together.

12. The cell stack of claim 11, wherein the separator membrane is fixed between the first frame member and the second frame member according to the method of any one of claims 1-10.

13. The cell stack of claim 11 or 12, wherein the fixation area comprises a third zone comprising a projection of a frame member or a sealing part, and the separator membrane mechanically compressed by the projection or the sealing part; and preferably wherein the fixation area comprises a fourth zone comprising the separator membrane mechanically compressed by a sealing part.

14. The cell stack of any one of claims 11-13, wherein the separator membrane is an ion-exchange membrane and the cell stack is configured for use in a redox flow battery, an electrolyzer or an electrodialysis cell.

15. Use of an ion-exchange membrane in the cell stack of any one of claims 11-14.
